# EUROPEAN PATENT SPECIFICATION

(11) **EP 4 437 420 B1**
(45) Date of publication and mention of the grant of the patent: **06.08.2025**
(21) Application number: 22822216.2
(22) Date of filing: 18.11.2022
(51) Int. Cl.: G06F 13/40, G06F 13/42

(54) **METHOD FOR INTERFACING A FIRST DATA READING/ WRITING UNIT WITH A SECOND DATA READING/WRITING UNIT AND INTERFACE MODULES THEREOF**
VERFAHREN ZUR SCHNITTSTELLENBILDUNG ZWISCHEN EINER ERSTEN DATENLESE-/-SCHREIBEINHEIT UND EINER ZWEITEN DATENLESE-/-SCHREIBEINHEIT UND SCHNITTSTELLENMODULE DAFÜR
PROCÉDÉ D'INTERFAÇAGE D'UNE PREMIÈRE UNITÉ DE LECTURE/ÉCRITURE DE DONNÉES AVEC UNE DEUXIÈME UNITÉ DE LECTURE/ÉCRITURE DE DONNÉES ET MODULES D'INTERFACE ASSOCIÉ

(30) Priority: 24.11.2021 IT 202100029735
(43) Date of publication of application: 02.10.2024
(73) Proprietor: SMART AI S.R.L., 50053 Empoli (Fi) (IT)
(72) Inventor: CARRA, Pietro, 56122 Pisa (PI) (IT); FERRARI, Elisa, 56122 Pisa (PI) (IT)
(74) Representative: Lunati & Mazzoni S.r.L.
(86) International application number: PCT/IB2022/061146
(87) International publication number: WO 2023/094954

(56) References cited:
- CN-A- 109 918 325
- EKAWAT HOMSIRIKAMOL ET AL: "GMU Hardware API for Authenticated Ciphers", IACR, INTERNATIONAL ASSOCIATION FOR CRYPTOLOGIC RESEARCH, vol. 20150706:065030, 3 July 2015 (2015-07-03), pages 1 - 24, XP061018831

## Description

The present invention relates to a method for interfacing a first data reading unit with a second data reading unit, in accordance with the preamble of claim 1.

In particular, described herein are a method for interfacing a first data reading unit with a second data reading unit and a method for interfacing a first data writing unit with a second data writing unit, as well as respective data reading and data writing interface modules.

The present invention is used in a data processing and/or acquisition system that is configured by means of FPGA (Field Programmable Gate Array) units and optionally SoC-FPGA (System on Chip FPGA) units. Several types of FPGA or SoC-FPGA units currently exist which can be used in various data processing and/or acquisition systems, e.g. image and/or video acquisition and coding systems, etc.

Such systems suffer from a number of drawbacks, which will be illustrated below.

A first drawback lies in the fact that such systems suffer from some criticalities in terms of data transfer speed during the data reading and/or writing processes; such criticalities are due to the low storage capacity of the memory buffers, e.g. FIFO memory modules, implemented in FPGA and/or SoC-FPGA units or the like.

A second drawback comes from the fact that poor data transfer speeds impair the performance of the processing and/or acquisition system as a whole.

It is therefore one object of the present invention to solve these and other problems of the prior art, and particularly to provide a method for interfacing a first data reading unit with a second data reading unit and a method for interfacing a first data writing unit with a second data writing unit, as well as respective data reading and data writing interface modules, which permit reducing the criticalities due to low data transfer speeds during the data reading and/or writing processes.

It is a further object of the present invention to provide a method for interfacing a first data reading unit with a second data reading unit and a method for interfacing a first data writing unit with a second data writing unit, as well as respective data reading and data writing interface modules, which make it possible to effectively regulate a flow of data being read and/or written in the functional modules included in FPGA and/or SoC-FPGA units.

In brief, the invention described herein consists of a method for interfacing, for data reading and/or writing purposes, two or more units, configurable as FPGA and/or SoC-FPGA units, which implement two or more functional modules such as, for example, FIFO memory functional modules, DMA (Direct Memory Access) functional modules, data acquisition (DAQ) functional modules, data output functional modules, data processing modules, communication modules, and so forth.

The invention will now be described in detail with particular reference to the annexed drawings, wherein:
- Figure 1 schematically shows a data processing and/or acquisition system according to one embodiment of the present invention;
- Figure 2 schematically shows a block diagram of an SoC-FPGA unit of the system of Figure 1;
- Figure 3 schematically shows a data reading interface module and a data writing interface module implemented in the SoC-FPGA unit of Figure 2;
- Figures 4a and 4b show, respectively, a first flow chart exemplifying a method for interfacing a first data reading unit with a second data reading unit, and a second flow chart exemplifying a method for interfacing a first data writing unit with a second data writing unit, in accordance with the present embodiment of the invention;
- Figures 5a to 5d show an example of signals exchanged with reference to the first and second flow charts of Figures 4a and 4b.

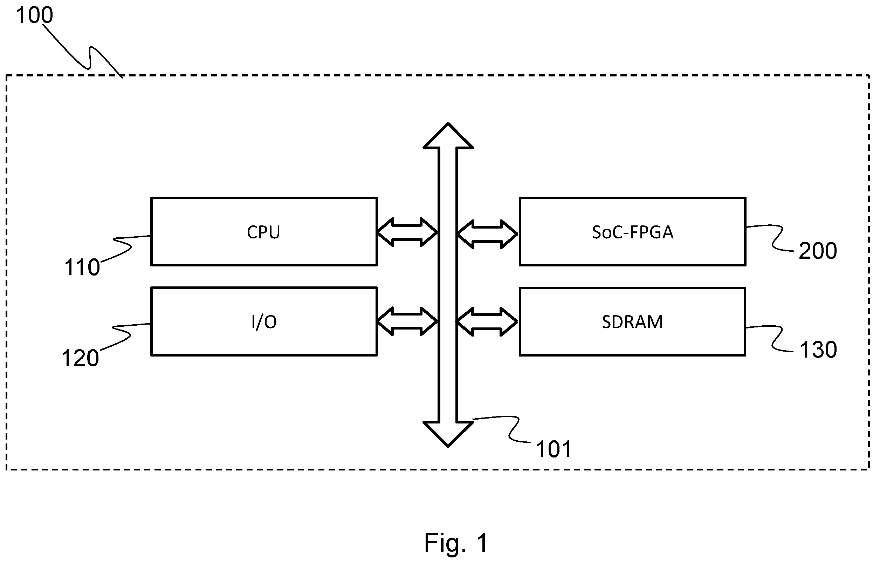

Figure 1 schematically shows a data processing and/or acquisition system 100, which comprises first processing means 110, I/O interface means 120, memory means 130, and second processing means 200. These can be interconnected via a communication bus 101, e.g. a PCI bus, etc.

The I/O interface means 120 are adapted to receive and transmit input/output information from the system 100 to a user, e.g. in order to allow the user to manage the system 100. The I/O interface means 120 may comprise, for example, a screen, a keyboard, a touchscreen, etc. In addition, the I/O interface means 120 may comprise communication means adapted to establish a communication channel to a server. The communication means may comprise, for example, a USB, CANBUS, ETHERNET, WiFi, Bluetooth, GSM, etc. interface.

The memory means 130 are adapted to store the information and the instructions of the system 100 according to the present embodiment of the invention, and may comprise, for example, a Flash-type solid-state memory, an SDRAM memory, etc. The information may comprise, for example, data and/or parameters relating to the system 100 and necessary for the operation of the same.

The first processing means 110 are adapted to process the information and the instructions stored in the memory means 130, with reference to the I/O interface means 120 and the second processing means 200, which will be described in further detail hereinafter. The first processing means 110 may comprise, for example, a multicore ARM processor, a multicore x86 processor, etc.

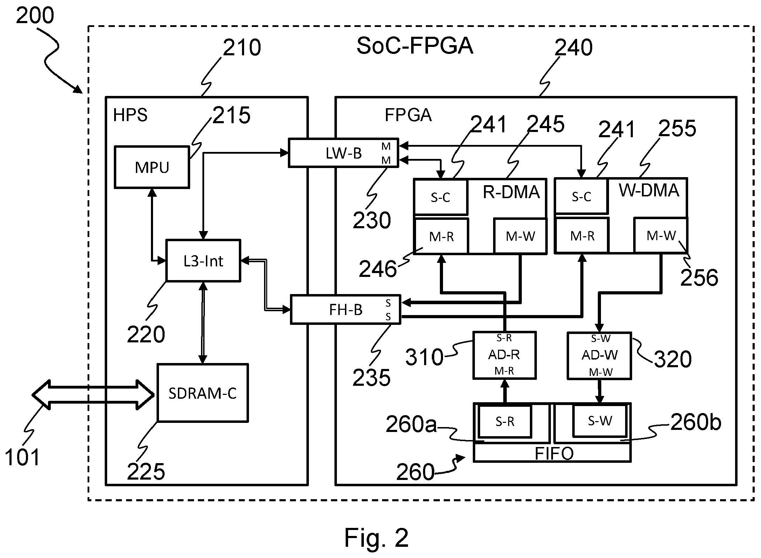

With reference to Figure 2, the second processing means 200 may comprise, in accordance with the present embodiment of the invention, an SoC-FPGA unit such as, for example, an Altera Cyclon V unit. In particular, the second processing means 200 may comprise an HPS (Hard Processor System) unit 210 and an FPGA unit 240 operatively connected to each other by means of, for example, a first interface 230 and a second interface 235.

The HPS unit 210 may comprise a microprocessor 215, e.g. an ARM Cortex-A9 MPCore processor, and an SDRAM controller 225 operatively connected to each other by means of a connection unit 220, e.g. an L3-Interconnect unit. In particular, the microprocessor 215 controls the connection unit 220, which in turn handles a flow of control data that is sent from the HPS unit 210 to the FPGA unit 240, and vice versa, via the first interface 230, which may comprise, for example, a Lightweight bridge bus having a 32-bit data width. Moreover, the connection unit 220 handles a flow of data from the HPS unit 210 to the FPGA unit 240, and vice versa, via the second interface 235, which may comprise, for example, an HPS-to-FPGA bridge bus and an FPGA-to-HPS bridge bus having a configurable 32-bit, 64-bit or 128-bit data width.

The FPGA unit 240 comprises a plurality of programmable logic elements and a plurality of reconfigurable interconnections that allow the logic elements to be physically connected to one another. It is therefore possible to configure the logic elements to implement simple functional modules such as, for example, AND and/or OR logic ports. Additionally or alternatively, the logic elements may be configured to implement complex functional modules such as, for example, FIFO memory functional modules, DMA (Direct Memory Access) functional modules, data acquisition (DAQ) functional modules, data output functional modules, data processing modules, communication modules, etc. Such functional modules can be configured, i.e. implemented, in the FPGA unit 240 by VHDL (VLSI Hardware Description Language), which permits describing hardware components. In fact, VHDL is not an executable language, and therefore it does not describe operations that a processor has to carry out in order to compute the result of a processing activity; on the contrary, the VHDL language describes the logic elements that constitute the circuit capable of executing the requested processing. Such functional modules, implemented by VHDL, can thus create interconnectable complex units, i.e. such units may comprise one or more functional modules operatively connected to one another.

In particular, according to the present embodiment of the invention, a first data reading unit 245 and a second data reading unit 260a, operatively connected to a data reading interface module 310, and a first data writing unit 255 and a second data writing unit 260b, operatively connected to a data writing interface module 320, are implemented in the FPGA unit 240, e.g. by VHDL using INTEL's Quartus-prime platform.

The first data reading unit 245 may comprise a DMA module for reading the data, hereafter referred to as R-DMA, and the first data writing unit 255 may comprise a further DMA module, hereafter referred to as W-DMA, while a second data reading and writing unit 260 may comprise both a second data reading unit 260a and a second data writing unit 260b; for example, the second data reading and writing unit 260 may comprise a FIFO memory module. In particular, the first data reading unit 245 and the first data writing unit 255 utilize a bus compliant with the Avalon standard and having a memory-mapped master-slave architecture for communicating with the second data reading and writing unit 260, i.e. for communicating with the FIFO memory module. Furthermore, in order to ensure highly configurable data management in the system 100, the second data reading and writing unit 260 may be implemented, for example, by means of a FIFO memory module in showahead mode, having as data Q a number of 1024 binary words of 32 bits each. Thus implemented, however, the second data reading and writing unit 260 is not compliant with the Avalon standard. As a matter of fact, the Avalon standard ensures interactive and controlled data transfer management, but its characteristics cannot be fully exploited when a FIFO memory module is used. In particular, the Avalon standard requires that data writing and reading request signals remain unchanged if the master receives a reading or writing waiting (waitrequest) signal, but this would cause a write operation to occur in a full FIFO memory module or a read operation to occur from an empty FIFO memory module; therefore, the FIFO memory module must not receive such data writing and reading request signals while a reading or writing waiting (waitrequest) signal is active.

In accordance with the present invention, advantageously, the data reading interface module 310 and the data writing interface module 320 allow, respectively, the first data reading unit 245 to be interfaced with the second data reading unit 260a and the first data writing unit 255 to be interfaced with the second data writing unit 260b, thereby advantageously ensuring highly configurable management of the data Q in the system 100. This advantageously makes it possible to prevent the data Q from being written to a full FIFO memory module or read from an empty FIFO memory module, thus preventing the FIFO memory module from receiving such signals while a reading or writing waiting (waitrequest) signal is active.

In addition or as an alternative to the present embodiment of the invention, the second data reading unit 260a and the second data writing unit 260b may be independent: for example, the second data reading unit 260a may comprise a data acquisition (DAQ) module comprising a first memory buffer, while the second data writing unit 260b may comprise a data output functional module comprising a second memory buffer, which do not comply with the Avalon standard.

Similarly to the above, in accordance with the present invention, the data reading interface module 310 and the data writing interface module 320 allow, respectively, the first data reading unit 245 to be interfaced with the second data reading unit 260a and the first data writing unit 255 to be interfaced with the second data writing unit 260b, thereby advantageously ensuring highly configurable management of the data Q in both the first memory buffer and the second memory buffer.

In accordance with the present embodiment of the invention, the data Q are transferred from the memory means 130, i.e. from an SDRAM memory, to the second data reading and writing unit 260, i.e. to the FIFO memory module, and vice versa. For example, the data Q may comprise a predefined total number of binary words, e.g. 10,000 binary words, each one consisting of 32 bits. With reference to Figure 2, the data Q can be read from the memory means 130 and transferred, over the bus 101, to the SDRAM controller 225, which then, via the connection unit 220, transfers the data Q to the FPGA unit by means of the second interface 235. The second interface 235 then sends the data Q to the first data writing unit 255, which, by means of the data writing interface module 320, writes the data Q to the second data reading and writing unit 260, i.e. to the FIFO memory module. In addition, the first data reading unit 245 can read the data Q from the second data reading and writing unit 260, i.e. from the FIFO memory module, by means of the data reading interface module 310, and can send the data Q to the SDRAM controller 225, via the connection unit 220, by means of the second interface 235. Thus, the data Q can be transmitted from the SDRAM controller 225 to the memory means 130, i.e. to the SDRAM memory, over the bus 101. The first data reading unit 245 and the first data writing unit 255 are managed by the HPS unit 210 by means of the first interface 230 operatively connected to a slave control port 241 of both the first data reading unit 245, i.e. the R-DMA module, and the first data writing unit 255, i.e. the W-DMA module. For example, the first data reading unit 245 and the first data writing unit 255 can be managed by the HPS unit 210 by using a control algorithm that can be implemented as portions of software code, e.g. written in the C programming language, which can be loaded into the HPS unit 210 from the memory means 130 via the bus 101.

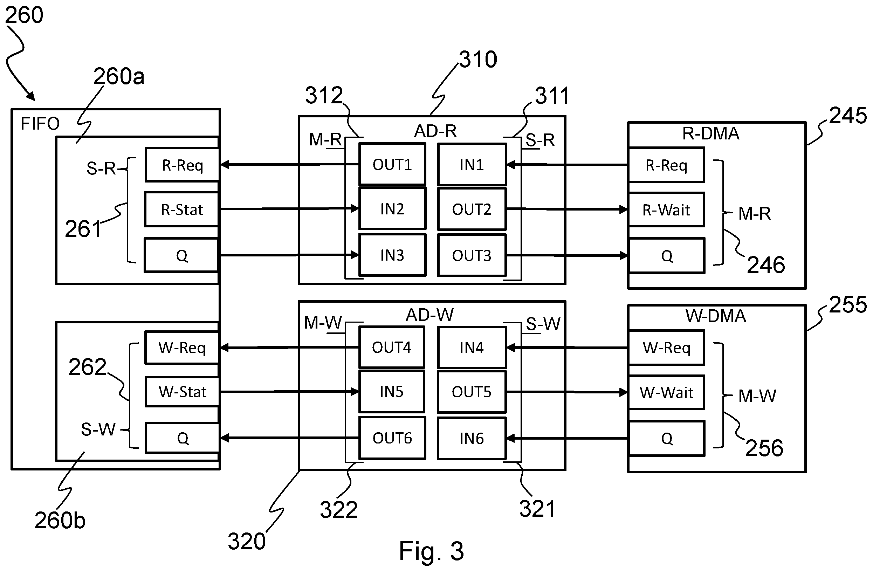

With reference to Figure 3, the following will describe the data reading interface module 310 and the data writing interface module 320 implemented in the second processing means 200 previously described herein with reference to Figure 2.

In particular, the data reading interface module 310 is implemented as a computer program product comprising portions of software code, e.g. VHDL software code, which is loaded into the FPGA unit 240.

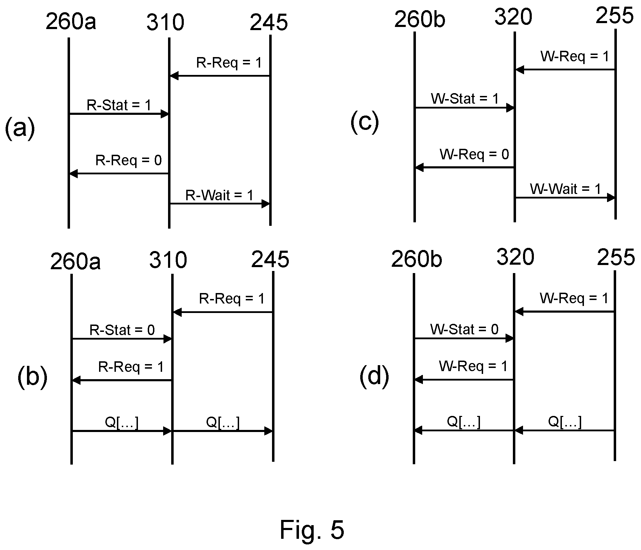

The data reading interface module 310 (see also Figures 5a and 5b) is adapted to:
- receive a data reading request signal R-Req, the data reading request signal R-Req being asserted and sent by the first data reading unit 245;
- receive a data reading status signal R-Stat sent by the second data reading unit 260a, the data reading status signal R-Stat being asserted in the absence of data Q in the second data reading unit 260a;
- verify if the data reading status signal R-Stat is asserted:
- if so, the data reading interface module 310 is adapted to unassert and send the data reading request signal R-Req to the data reading interface module 310 and to assert and send a data reading waiting signal R-Wait to the first data reading unit 245,
- otherwise the data reading interface module 310 is adapted to send the data reading request signal R-Req to said second data reading unit 260a and to receive the data Q from the second data reading unit 260a and send such data Q to the first data reading unit 245.

It should be noted that, in the present description, to assert a signal means to set its logic state to "TRUE", whereas to unassert a signal means to set its logic state to "FALSE".

In addition, the first data reading unit 245 may comprise a first data reading port 246 adapted to send the data reading request signal R-Req and adapted to receive the data reading waiting signal R-Wait and/or to receive the data Q. In addition, the second data reading unit 260a may comprise a second data reading port 261 adapted to receive the data reading request signal R-Req and adapted to send the data reading status signal R-Stat and/or to send the data Q. In addition, the data reading interface module 310 may comprise a third data reading port 311 adapted to receive, e.g. at a first input IN1, the data reading request signal R-Req and adapted to send the data reading waiting signal R-Wait, e.g. from a second output OUT2, and/or to send the data Q, e.g. from a third output OUT3. In addition, the data reading interface module 310 may comprise a fourth data reading port 312 adapted to send the data reading request signal R-Req, e.g. from a first output OUT1, and adapted to receive the data reading status signal R-Stat, e.g. at a second input IN2, and/or to receive the data Q, e.g. at a third input IN3. In addition, the first data reading port 246 and the fourth data reading port 312 may be of the master type, whereas the second data reading port 261 and the third data reading port 311 may be of the slave type.

In addition, the second data reading and writing unit 260 may comprise the second data reading unit 260a; in particular, said second data reading and writing unit 260 may comprise the FIFO memory module, wherein the data reading status signal R-Stat comprises an empty FIFO memory signal (Empty).

In addition, the first data reading unit 245 may comprise a DMA module, i.e. the R-DMA module, wherein the data reading waiting signal R-Wait comprises a waitrequest signal. Similarly, the data writing interface module 320 is implemented as a computer program product comprising portions of software code, e.g. VHDL software code, which is loaded into the FPGA unit 240.

The data writing interface module 320 (see also Figures 5c and 5d) is adapted to:
- receive a data writing request signal W-Req, the data writing request signal W-Req being asserted and sent by the first data writing unit 255;
- receive a data writing status signal W-Stat sent by the second data writing unit 260b, the data writing status signal W-Stat being unasserted in the absence of data Q in the second data writing unit 260b;

- verify if the data writing status signal W-Stat is asserted:
- if so, the data writing interface module 320 is adapted to unassert and send the data writing request signal W-Req and to assert and send a data writing waiting signal W-Wait to the first data writing unit 255,
- otherwise the data writing interface module 320 is adapted to send the data writing request signal W-Req to said second data writing unit 260b and to receive the data Q from the first data writing unit 255 and send such data Q to the second data writing unit 260b.

For example, the first data writing unit 255 may comprise a first data writing port 256 adapted to send the data writing request signal W-Req and adapted to receive the data writing waiting signal W-Wait and/or to send the data Q. In addition, the second data writing unit 260b may comprise a second data writing port 262 adapted to receive the data writing request signal W-Req and adapted to send the data writing status signal W-Stat and/or to send the data Q. In addition, the data writing interface module 320 may comprise a third data writing port 321 adapted to receive, e.g. at a fourth input IN4, the data writing request signal W-Req and adapted to send the data writing waiting signal W-Wait, e.g. from a fifth output OUT5, and/or to receive the data Q, e.g. at a sixth input IN6. In addition, the data writing interface module 320 may comprise a fourth data writing port 322 adapted to send the data writing request signal W-Req, e.g. from a fourth output OUT4, and adapted to receive the data writing status signal W-Stat, e.g. at a fifth input IN5, and/or to send the data Q, e.g. from a sixth output OUT6.

In addition, the first data writing port 256 and the fourth data writing port 322 may be of the master type, whereas the second data writing port 262 and the third data writing port 321 may be of the slave type.

In addition, the second data reading and writing unit 260 may comprise the second data writing unit 260b; in particular, said second data reading and writing unit 260 may comprise the FIFO memory module, wherein the data writing status signal W-Stat comprises a full FIFO memory signal (Full).

In addition, the first data writing unit 255 comprises a DMA module, i.e. the W-DMA module, wherein the data writing waiting signal W-Wait comprises a waitrequest signal.

It should be noted that the R-Req, R-Stat, R-Wait, W-Req, W-Stat and W-Wait signals may be binary signals, i.e. they may be binary electric signals for which one can determine a high voltage value, indicated as "1", and a low voltage value, indicated as "0". According to a positive logic, the high value "1" is associated with a "TRUE" logic state, whereas the low value "0" is associated with a "FALSE" logic state.

Alternatively, according to a negative logic, the high value "1" is associated with the "FALSE" logic state, whereas the low value "0" is associated with the "TRUE" logic state. In the present description, to assert a signal means to set its logic state to "TRUE", whereas to unassert a signal means to set its logic state to "FALSE".

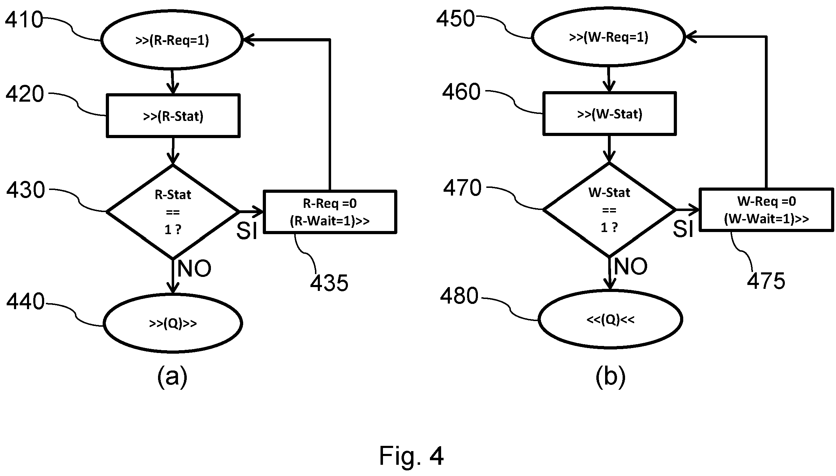

With reference to Figures 4a to 5d, said R-Req, R-Stat, R-Wait, W-Req, W-Stat and W-Wait signals are considered herein in accordance with a positive logic. In particular, the following table describes in more detail the above-mentioned R-Req, R-Stat, R-Wait, W-Req, W-Stat and W-Wait signals.

| TABLE 1 | |
|---|---|
| Signal | Description |
| R-Req | If asserted, indicates to the second reading unit 260a that data Q are to be read from said second reading unit 260a. |
| R-Stat | If asserted, indicates to a unit wanting to read data Q from the second reading unit 260a that the second reading unit 260a has no data Q, i.e. it is empty. Therefore, if the unit wanting to read data Q from the second reading unit 260a tries to read them, it will find inconsistent, i.e. meaningless, data Q. |
| R-Wait | If asserted, indicates to the unit that receives this signal that the reading operations must be interrupted. The reading operations will be normally resumed when this signal is unasserted. |
| W-Req | If asserted, indicates to the second writing unit 260b that data Q are to be written to said second writing unit 260b. |
| W-Stat | If asserted, indicates to a unit wanting to write data Q to the second writing unit 260b that the second writing unit 260b has no room for new data Q', i.e. it is full. Therefore, if the unit wanting to write new data Q' to the second writing unit 260b tries to write them, the data Q in the second writing unit 260b may be inconsistent, i.e. meaningless. |
| W-Wait | If asserted, indicates to the unit receiving this signal that the writing operations must be interrupted. The writing operations will be normally resumed when this signal is unasserted. |

Advantageously, the data reading interface module 310 and the data writing interface module 320 make it possible to regulate the flow of data Q by means of the R-Stat, R-Wait, W-Stat and W-Wait signals, so that the control algorithm of the first data reading unit 245 and first data writing unit 255, i.e. of the R-DMA and W-DMA modules, can be programmed to allow data transfers Q exceeding the size of the FIFO memory (1,024 binary words), thus considerably improving the transfer speed of the data Q in the system 100.

In particular, considering that the first data reading unit 245 comprises the R-DMA module and that the first data writing unit 255 comprises the W-DMA module, for the control algorithm in the HPS unit to be able to manage the first data reading unit 245 and the first data writing unit 255 it is necessary to know one or more of the following address values: an address value of the second data reading port 261, an address value of the second data writing port 262, an address value of the control port 241 of each DMA module, and an address value corresponding to the base of the usable portion of SDRAM memory.

Such addresses can be determined as follows:
a) considering a master port in the HPD unit 210 connected, via the second interface 235, to the FPGA unit 240, then the address value (address) of such master port will be equal to the sum of an offset value of the second interface 235 (bridge_base) and a base address value of the slave port of the FPGA unit 240 (slave_base), i.e.: address= bridge_base+slave_base;
b) considering a master port in the FPGA unit 240, the address value (address) of such master port will be equal to the base address value of the slave port of the FPGA unit 240 (slave_base), i.e.: address=slave_base.

Those addresses which are useful for managing the R-DMA and W-DMA modules, the SDRAM memory and the FIFO memory are listed in the following table.

| TABLE 2 | | | |
|---|---|---|---|
| Slave | Master | Interface (bridge) | Address |
| W-DMA | HPS unit 210 | First interface 230 (Lightweight) | LW_BASE+W-DMA_BASE |
| R-DMA | HPS unit 210 | First interface 230 (Lightweight) | LW_BASE+R-DMA_BASE |
| SDRAM | W-DMA, R-DMA | Second interface 235 (FPGA -> HPS) | SDRAM_BASE |
| FIFO | W-DMA, R-DMA | None | FIFO_BASE |

In Table 2, the LW_BASE value corresponds to a predefined parameter named LT_LWFPGASLVS_OFST, which can be retrieved from the "hps.h" file supplied by Altera in the installation folder of Quartus-prime reserved for the specific libraries of the device in use (a Cyclone V in this case), while the R-DMA _BASE and W-DMA_BASE values can be found in the Qsys screen of the Quartus-prime platform or in the "*.h" files generated in Altera SoC EDS by means of the sopc-create-header-files command (to execute the command, it is necessary to have available the "*.sopcinfo" file relating to the project generated by the Quartus-prime platform during the compilation phase).

For the SDRAM_BASE address, no offset is considered: each DMA module is connected to the HPS unit 210 through the second interface 235 (FPGA -> HPS), which sees an L3 address-space, wherein the first 2GB are mapped in the SDRAM; it is then sufficient to define a SDRAM portion reserved for data transfer. Lastly, for the SDRAM_BASE address, no offset is considered: such address can be retrieved from the "*.h" files or from the Qsys screen on the Quartus-prime platform. Note that, for simultaneously reading from and writing to the FIFO memory module, it is possible to define two different addresses for the data reading and writing ports, or else to use two different FIFO memory modules. Note also that, in order to be able to use all the above-described addresses, it will first be necessary to map the memory area where they are located in the user-space by using the mmap command, which will return a pointer to the first address of the mapped memory area. In addition, it must be pointed out that the Linux operating system, preinstalled in the development board, normally uses all the SDRAM, and it is therefore necessary to reserve a SDRAM portion for data transfer; this can be done, for example, by executing the following U-BOOT command:
*$ setenv mmcboot 'setenv bootargs console=ttyS0,115200 mem=800M root=${mmcroot} rw rootwait;bootz ${loadaddr} - ${fdtaddr}' $ saveenv*

In this case, the SDRAM dedicated to the Linux operating system will be reduced to 800MB; therefore, the SDRAM address to be communicated to the R-DMA and W-DMA modules will be 0x32000000 (address of the 800th MB).

In order to execute a bidirectional data transfer from the memory means 130, i.e. from the SDRAM memory, to the second data reading and writing unit 260, i.e. to the FIFO memory module, the control algorithm in the HPS unit 210 must be able to write or read one or more of the following registers of the first data reading unit 245, i.e. of the R-DMA module, and of the first data writing unit 255, i.e. of the W-DMA module: a status register, a read register, a write register, a transfer length register, and a control register. Such registers are accessible, for each R-DMA and W-DMA module, by respectively adding to the above-described LW_BASE+R-DMA_BASE and LW_BASE+W-DMA_BASE addresses a further offset value as specified in the following table.

| TABLE 3 | |
|---|---|
| R-DMA and W-DMA registers | Offset |
| status | 0 |
| read | 1 |
| write | 2 |
| transfer length | 3 |
| control | 6 |

The following will describe such registers in detail; in particular, the status register is described in the following table.

| TABLE 4 | | | |
|---|---|---|---|
| Bit | Name | Operations | Description |
| 0 | DONE | Read/Clear | This bit is set to 1 when the DMA module has completed the data transfer. Writing 0 in the status register is tantamount to setting this bit to 0. |
| 1 | BUSY | Read | The BUSY bit is set to 1 when a data transfer is in progress. |
| 2 | REOP | Read | The REOP bit is set to 1 when the data transfer ends because of the reception of an end-of-packet signal from the reading port. This bit |
| | | | is not used in the case under examination, since only transfers having a predetermined length are carried out. |
| 3 | WEOP | Read | The WEOP bit is set to 1 when the data transfer ends because of the reception of an end-of-packet signal from the writing port. This bit is not used in the case under examination, since only transfers having a predetermined length are carried out. |
| 4 | LEN | Read | The LEN bit is set to 1 when a preset-length transfer ends. |

The read register contains the first address from which each R-DMA and W-DMA module reads the data Q to be transferred; the subsequent addresses are obtained by suitably incrementing this address, depending on the size of the individual elements of the transfer. When reading from a constant address is desired (as is the case when reading from the FIFO module), it is necessary to set to 1 the RCON bit in the control register. The size of this register is defined when the first reading unit 245 and the first writing unit 255 are generated, and may be sufficiently large to identify all the slave peripherals connected to the first data reading port 246 of each R-DMA and W-DMA module.

The write register contains the first address whereto each R-DMA and W-DMA module writes the data Q to be transferred; the subsequent addresses are obtained by suitably incrementing this address, depending on the size of the individual binary words of the transfer. When writing to a constant address is desired (as is the case when writing to the FIFO module), it is necessary to set to 1 the WCON bit in the control register. The size of this register is defined when the system is generated, and is sufficiently large to identify all the slave peripherals connected to the first data writing port 256 of each R-DMA and W-DMA module.

The length register contains a number of bytes of the data Q to be transferred, and its value is progressively decremented during the transfer: when it reaches 0, the LEN bit in the status register is set to 1 and the transfer ends.

The control register consists of single bits that specify the behaviour of each R-DMA and W-DMA module in accordance with the following table.

| TABLE 5 | | | |
|---|---|---|---|
| Bit | Name | Operations | Description |
| 0 | BYTE | Read/Write | Specifies that the size of the binary words to be transferred is 1 byte. |
| 1 | HW | Read/Write | Specifies that the size of the binary words to be transferred is 2 bytes. |
| 2 | WORD | Read/Write | Specifies that the size of the binary words to be transferred is 4 byte. |
| 3 | GO | Read/Write | Starts a data transfer Q. If the value of this bit is 1 and the value of the length register is different from 0, a data transfer Q is started. |
| 4 | I_EN | Read/Write | Enables the transmission of an interrupt-request signal to the HPS unit 210. |
| 5 | REEN | Read/Write | Indicates that the data transfer Q ends when the reading port receives an end-of-packet signal. |
| 6 | WEEN | Read/Write | Indicates that the data transfer Q ends when the writing port receives an end-of-packet signal. |
| 7 | LEEN | Read/Write | Indicates that the data transfer Q ends when the length register reaches the value 0. If this bit is 0, then the value of the length register is ignored and the data transfer Q must be ended by an end-of packet signal. |
| 8 | RCON | Read/Write | Indicates that the read address must remain constant. |
| 9 | WCON | Read/Write | Indicates that the write address must remain constant. |
| 10 | DOUBLEWORD | Read/Write | Specifies that the size of the binary words to be transferred is 8 bytes. |
| 11 | QUADWORD | Read/Write | Specifies that the size of the binary words to be transferred is 16 bytes. |
| 12 | SOFTWARERES ET | Read/Write | Writing 1 twice in this bit resets the whole DMA module. |

It must be pointed out that, of all the bits that define the size of the binary words to be transferred, only one can be set to 1, otherwise the behaviour of the DMA module will be undetermined.

With reference to Figures 4a, 5a and 5b, the following will describe a method for interfacing the first data reading unit 245 with the second data reading unit 260a, both of which are operatively connected to the data reading interface module 310, in accordance with the present embodiment of the invention.

At step 410, a data reading request phase is carried out, in which the data reading request signal R-Req is received by the data reading interface module 310. Said data reading request signal R-Req is asserted and sent by the first data reading unit 245.

At step 420, a reading status signalling phase is carried out, in which the data reading status signal R-Stat is received by the data reading interface module 310, wherein the data reading status signal R-Stat is sent by said second data reading unit 260a; the data reading status signal R-Stat is asserted in the absence of data Q in said second data reading unit 260a.

At step 430, a reading status verification phase is carried out, in which the data reading interface module 310 verifies if the data reading status signal R-Stat is asserted, in which case the data reading interface module 310 will execute step 435, otherwise it will execute step 400.

At step 435, a data reading waiting phase is carried out, in which the data reading request signal R-Req is unasserted and sent to the second data reading unit 260a by the data reading interface module 310, and the data reading waiting signal R-Wait is asserted and sent to the first data reading unit 245 by the data reading interface module 310.

At step 440, a data reading phase is carried out, in which the data reading interface module 310 sends the data reading request signal R-Req to the second data reading unit 260a, and in which the data reading interface module 310 receives the data Q from the second data reading unit 260a and sends said data Q to the first data reading unit 245.

For example, the first data reading unit 245 may comprise the first data reading port 246, which sends the data reading request signal R-Req and receives the data reading waiting signal R-Wait and/or receives the data Q.

In addition, the second data reading unit 260a may comprise the second data reading port 261, which receives the data reading request signal R-Req and sends the data reading status signal R-Stat and/or sends the data Q.

In addition, the data reading interface module 310 may comprise the third data reading port 311, which receives the data reading request signal R-Req and sends the data reading waiting signal R-Wait and/or sends the data Q.

Lastly, the data reading interface module 310 may comprise a fourth data reading port 312, which sends the data reading request signal R-Req and receives the reading status signal R-Stat and/or receives the data Q.

For example, the first data reading port 246 and the fourth data reading port 312 may be of the master type, whereas the second data reading port 261 and the third data reading port 311 may be of the slave type.

For example, the second data reading and writing unit 260 may comprise the second data reading unit 260a; in particular, said second data reading and writing unit 260 may comprise the FIFO memory module, wherein the data reading status signal R-Stat comprises an empty FIFO memory signal (Empty).

For example, the first data reading unit 245 may comprise a DMA module, i.e. the R-DMA module, wherein the data reading waiting signal R-Wait comprises the waitrequest signal.

It will be apparent to those skilled in the art that the above-described method for interfacing the first data reading unit 245 with the second data reading unit 260a is implemented in the FPGA unit 240 by means of a computer program product comprising portions of software code, e.g. VHDL software code, which is loaded into the FPGA unit 240 in order to implement the data reading interface module 310. This will allow the system 100 to include the FPGA unit 240 adapted to implement the data reading interface module 310 in accordance with the method for interfacing the first data reading unit 245 with the second data reading unit 260a, as described above with reference to steps 410 to 440.

Similarly, with reference to Figures 4b, 5c and 5d, the following will describe a method for interfacing the first data writing unit 255 with the second data writing unit 260b, both of which are operatively connected to the data writing interface module 320, in accordance with the present embodiment of the invention.

At step 450, a data writing request phase is carried out, in which the data writing request signal W-Req is received by the data writing interface module 320, wherein the data writing request signal W-Req is asserted and sent by the first data writing unit 255.

At step 460, a writing status signalling phase is carried out, in which the data writing status signal W-Stat is received by the data writing interface module 320, wherein the data writing status signal W-Stat is sent by the second data writing unit 260b; the data writing status signal W-Stat is unasserted in the absence of data Q in the second data writing unit 260b.

At step 470, a writing status verification phase is carried out, in which the data writing interface module 320 verifies if said data writing status signal W-Stat is asserted, in which case the data writing interface module 320 will execute step 475, otherwise it will execute step 480.

At step 475, a data writing waiting phase is carried out, in which the data writing request signal W-Req is unasserted and sent to the second data writing unit 260b by the data writing interface module 320, and the data writing waiting signal W-Wait is asserted and sent to the first data writing unit 255 by the data writing interface module 320.

At step 480, a data writing phase is carried out, in which the data writing interface module 320 sends the data writing request signal W-Req to the second data writing unit 260b, and the data writing interface module 320 receives the data Q from the first data writing unit 255 and sends the data Q to the second data writing unit 260b.

For example, the first data writing unit 255 may comprise the first data writing port 256, which sends the data writing request signal W-Req and receives the data writing waiting signal W-Wait and/or sends the data Q. In addition, the second data writing unit 260b may comprise the second data writing port 262, which receives the data writing request signal W-Req and sends the data writing status signal W-Stat and/or receives the data Q. In addition, the data writing interface module 320 may comprise a third data writing port 321, which receives the data writing request signal W-Req and sends the data writing waiting signal W-Wait and/or receives the data Q. Lastly, the data writing interface module 320 may comprise the fourth data writing port 322, which sends the data writing request signal W-Req and receives the data writing status signal W-Stat and/or sends the data Q.

For example, the first data writing port 256 and the fourth data writing port 322 are of the master type, whereas the second data writing port 262 and the third data writing port 321 are of the slave type.

For example, the second data reading and writing unit 260 may comprise the second data writing unit 260b; in particular, said second data reading and writing unit 260 may comprise the FIFO memory module, wherein the data writing status signal W-Stat comprises a full FIFO memory signal (Full).

For example, the first data writing unit 255 may comprise a DMA module, i.e. the W-DMA module, wherein the data writing waiting signal W-Wait comprises a waitrequest signal.

It will be apparent to those skilled in the art that the above-described method for interfacing the first data writing unit 255 with the second data writing unit 260b is implemented in the FPGA unit 240 by means of a further computer program product comprising portions of software code, e.g. VHDL software code, which is loaded into the FPGA unit 240 in order to implement the data writing interface module 320. This will allow the system 100 to include the FPGA unit 240 adapted to implement the data writing interface module 320 in accordance with the method for interfacing the first data writing unit 255 with the second data writing unit 260b, as described above with reference to steps 450 to 480.

The advantages of the present invention are apparent from the above description.

The present invention advantageously provides a method for interfacing a first data reading unit with a second data reading unit and a method for interfacing a first data writing unit with a second data writing unit, as well as respective data reading and data writing interface modules, which ensure highly configurable data management for the memory buffers of the second reading unit and second writing unit.

A further advantage of the present invention lies in the fact that it provides a data reading interface module and a data writing interface module that make it possible to regulate the data flow by means of signals exchanged between the first data reading unit and the second data reading unit and between the first data writing unit and the second data writing unit, so that the control algorithm of the first data reading unit and of the first data writing unit can be programmed in such a way as to allow for data transfers exceeding the size of the memory buffers, thereby considerably improving the data transfer speed of the data processing and/or acquisition system.

Of course, without prejudice to the principle of the present invention, the embodiments and the implementation details may be extensively varied from those described and illustrated herein without however departing from the protection scope of the present invention as set out in the appended claims.

## Claims

1. Method for interfacing a first data reading unit (245) with a second data reading unit (260a) operatively connected to a data reading interface module (310), said method comprising:
- a data reading request phase, in which a data reading request signal (R-Req) is received by said data reading interface module (310), said data reading request signal (R-Req) being asserted and sent by said first data reading unit (245);
- a reading status signalling phase, in which a data reading status signal (R-Stat) is received by said data reading interface module (310), wherein the data reading status signal (R-Stat) is sent by said second data reading unit (260a), said data reading status signal (R-Stat) being asserted in the absence of data (Q) in said second data reading unit (260a);
- a reading status verification phase, in which said data reading interface module (310) verifies if said data reading status signal (R-Stat) is asserted, in which case said data reading interface module (310) will execute a data reading waiting phase, otherwise it will execute a data reading phase, wherein:
- in said data reading waiting phase, the data reading request signal (R-Req) is unasserted and sent to said second data reading unit (260a) by said data reading interface module (310), and a data reading waiting signal (R-Wait) is asserted and sent to said first data reading unit (245) by said data reading interface module (310);
- in said data reading phase, said data reading interface module (310) sends said data reading request signal (R-Req) to said second data reading unit (260a), and wherein said data reading interface module (310) receives the data (Q) from said second data reading unit (260a) and sends said data (Q) to said first data reading unit (245).

2. Method according to claim 1, wherein said first data reading unit (245) comprises a first data reading port (246) that sends said data reading request signal (R-Req) and receives said data reading waiting signal (R-Wait) and/or receives said data (Q),
and wherein said second data reading unit (260a) comprises a second data reading port (261) that receives said data reading request signal (R-Req) and sends said data reading status signal (R-Stat) and/or sends said data (Q),
and wherein said data reading interface module (310) comprises a third data reading port (311) that receives said data reading request signal (R-Req) and sends said data reading waiting signal (R-Wait) and/or sends said data (Q),
and wherein said data reading interface module (310) comprises a fourth data reading port (312) that sends said data reading request signal (R-Req) and receives said reading status signal (R-Stat) and/or receives said data (Q).

3. Method according to claim 2, wherein said first data reading port (246) and said fourth data reading port (312) are of the master type, and wherein said second data reading port (261) and said third data reading port (311) are of the slave type.

4. Method according to one or more of claims 1 to 3, wherein a second data reading and writing unit (260) comprises said second reading unit (260a), said second data reading and writing unit (260) comprising a FIFO memory module, and wherein said data reading status signal (R-Stat) comprises an empty FIFO memory signal.

5. Method according to one or more of claims 1 to 4, wherein said first data reading unit (245) comprises a DMA module, and wherein said data reading waiting signal (R-Wait) comprises a waitrequest signal.

6. Method for interfacing a first data writing unit (255) with a second data writing unit (260b) operatively connected to a data writing interface module (320), said method comprising:
- a data writing request phase, in which a data writing request signal (W-Req) is received by said data writing interface module (320), said data writing request signal (W-Req) being asserted and sent by said first data writing unit (255);
- a writing status signalling phase, in which a data writing status signal (W-Stat) is received by said data writing interface module (320), wherein the data writing status signal (W-Stat) is sent by said second data writing unit (260b), said data writing status signal (W-Stat) being unasserted in the absence of data (Q) in said second data writing unit (260b);
- a writing status verification phase, in which said data writing interface module (320) verifies if said data writing status signal (W-Stat) is asserted, in which case said data writing interface module (320) will execute a data writing waiting phase, otherwise it will execute a data writing phase, wherein:
- in said data writing waiting phase, the data writing request signal (W-Req) is unasserted and sent to said second data writing unit (260b) by said data writing interface module (320), and a data writing waiting signal (W-Wait) is asserted and sent to said first data writing unit (255) by said data writing interface module (320);
- in said data writing phase, said data writing interface module (320) sends said data writing request signal (W-Req) to said second data writing unit (260b), and wherein said data writing interface module (320) receives the data (Q) from said first data writing unit (255) and sends said data (Q) to said second data writing unit (260b).

7. Method according to claim 6, wherein said first data writing unit (255) comprises a first data writing port (256) that sends said data writing request signal (W-Req) and receives said data writing waiting signal (W-Wait) and/or sends said data (Q),
and wherein said second data writing unit (260b) comprises a second data writing port (262) that receives said data writing request signal (W-Req) and sends said writing status signal (W-Stat) and/or receives said data (Q),
and wherein said data writing interface module (320) comprises a third data writing port (321) that receives said data writing request signal (W-Req) and sends said data writing waiting signal (W-Wait) and/or receives said data (Q),
and wherein said data writing interface module (320) comprises a fourth data writing port (322) that sends said data writing request signal (W-Req) and receives said data writing status signal (W-Stat) and/or sends said data (Q).

8. Method according to claim 7, wherein said first data writing port (256) and said fourth data writing port (322) are of the master type, and wherein said second data writing port (262) and said third data writing port (321) are of the slave type.

9. Method according to one or more of claims 6 to 8, wherein a second data reading and writing unit (260) comprises said second data writing unit (260b), said second data reading and writing unit (260) comprising a FIFO memory module, and wherein said data writing status signal (W-Stat) comprises a full FIFO memory signal.

10. Method according to one or more of claims 6 to 9, wherein said first data writing unit (255) comprises a DMA module, and wherein said data writing waiting signal (W-Wait) comprises a waitrequest signal.

11. Computer program product comprising portions of software code, which is loaded into an FPGA unit (240), adapted to implement a data reading interface module (310) in accordance with the method according to one or more of claims 1 to 5.

12. System (100) comprising first processing means (110), I/O interface means (120), memory means (130) and second processing means (200) comprising an FPGA unit (240) adapted to implement a data reading interface module (310) in accordance with the method according to one or more of claims 1 to 5.

13. Computer program product comprising portions of software code, which is loaded into an FPGA unit (240), adapted to implement a data writing interface module (320) in accordance with the method according to one or more of claims 6 to 10.

14. System (100) comprising first processing means (110), I/O interface means (120), memory means (130) and second processing means (200) comprising an FPGA unit (240) adapted to implement a data writing interface module (320) in accordance with the method according to one or more of claims 6 to 10.

## Patentansprüche

1. Verfahren zum Verknüpfen einer ersten Datenleseeinheit (245) mit einer zweiten Datenleseeinheit (260a), die operativ mit einem Datenlese-Schnittstellenmodul (310) verbunden ist, das Verfahren umfassend:
- eine Datenlese-Anforderungsphase, in der ein Datenlese-Anforderungssignal (R-Req) von dem Datenlese-Schnittstellenmodul (310) empfangen wird, wobei das Datenauslese-Anforderungssignal (R-Req) von der ersten Datenleseeinheit (245) geltend gemacht wird und gesendet wird;
- eine Lesestatus-Signalisierungsphase, in der ein Datenlese-Statussignal (R-Stat) von dem Datenlese-Schnittstellenmodul (310) empfangen wird, wobei das Datenauslese-Statussignal (R-Stat) von der zweiten Datenleseeinheit (260a) gesendet wird, wobei das Datenlese-Statussignal (R-Stat) in Abwesenheit von Daten (Q) in der zweiten Datenleseeinheit (260a) geltend gemacht wird;
- eine Lesestatus. Überprüfungsphase, in der das Datenlese-Schnittstellenmodul (310) überprüft, ob das Datenlesestatussignal (R-Stat) geltend gemacht wird, wobei das Datenlese-Schnittstellenmodul (310) in diesem Fall eine Datenlese-Wartephase ausführen wird, andernfalls wird es eine Datenlesephase ausführen, wobei:
- in der Datenlese-Wartephase das Datenlese-Anforderungssignal (R-Req) ungeltend gemacht wird und von dem Datenlese-Schnittstellenmodul (310) an die zweite Datenleseeinheit (260a) gesendet wird und ein Datenlese-Wartesignal (R-Wait) von dem Datenlese-Schnittstellenmodul (310) geltend gemacht wird und an die erste Datenleseeinheit (245) gesendet wird;
- in der Datenlesephase das Datenlese-Schnittstellenmodul (310) das Datenlese-Anforderungssignal (R-Req) an die zweite Datenleseeinheit (260a) sendet, und wobei das Datenlese-Schnittstellenmodul (310) die Daten (Q) von der zweiten Datenleseeinheit (260a) empfängt und die Daten (Q) an die erste Datenleseeinheit (245) sendet.

2. Verfahren nach Anspruch 1, wobei die erste Datenleseeinheit (245) einen ersten Datenlese-Port (246) umfasst, der das Datenlese-Anforderungssignal (R-Req) sendet und das Datenlese-Wartesignal (R-Wait) empfängt und/oder die Daten (Q) empfängt,
und wobei die zweite Datenleseeinheit (260a) einen zweiten Datenslese-Port (261) umfasst, der das Datenlese-Anforderungssignal (R-Req) empfängt und das Datenlese-Statussignal (R-Stat) sendet und/oder die Daten (Q) sendet,
und wobei das Datenslese-Schnittstellenmodul (310) einen dritten Datenlese-Port (311) umfasst, der das Datenlese-Anforderungssignal (R-Req) empfängt und das Datenslese-Wartesignal (R-Wait) sendet und/oder die Daten (Q) sendet,
und wobei das Datenlese-Schnittstellenmodul (310) einen vierten Datenlese-Port (312) umfasst, der das Datenlese-Anforderungssignal (R-Req) sendet und das Datenlese-Statussignal (R-Stat) empfängt und/oder die Daten (Q) empfängt.

3. Verfahren nach Anspruch 2, wobei der erste Datenlese-Port (246) und der vierte Datenlese-Port (312) vom Typ Master sind und wobei der zweite Datenlese-Port (261) und der dritte Datenlese-Port (311) vom Typ Slave sind.

4. Verfahren nach einem oder mehreren der Ansprüche 1 bis 3, wobei eine zweite Datenlese- und Schreibeeinheit (260) die zweite Datenleseeinheit (260a) umfasst, wobei die zweite Datenlese- und Schreibeeinheit (260) ein FIFO-Speichermodul umfasst, wobei das Datenlese-Statussignal (R-Stat) ein Leer-FIFO Speichersignal umfasst.

5. Verfahren nach einem oder mehreren der Ansprüche 1 bis 4, wobei die erste Datenleseeinheit (245) ein DMA-Modul umfasst und das Datenlese-Wartesignal (R-Wait) ein Warteanforderungssignal umfasst.

6. Verfahren zum Verknüpfen einer ersten Datenschreibeeinheit (255) mit einer zweiten Datenschreibeeinheit (260b), die operativ mit einem Datenschreib-Schnittstellenmodul (320) verbunden ist, das Verfahren umfassend:
- eine Datenschreib-Anforderungsphase, in der ein Datenschreib-Anforderungssignal (W-Req) von dem Datenschreib-Schnittstellenmodul (320) empfangen wird, wobei das Datenschreib-Anforderungssignal (W-Req) von der ersten Datenschreibeeinheit (255) geltend gemacht wird und gesendet wird;-
- eine Schreibstatus-Signalisierungsphase, in der ein Datenschreib-Statussignal (W-Stat) von dem Datenschreib-Schnittstellenmodul (320) empfangen wird, wobei das Datenschreib-Statussignal (W-Stat) von der zweiten Datenschreibeeinheit (260b) gesendet wird, wobei das Datenschreib-Statussignal (W-Stat) in Abwesenheit von Daten (Q) in der zweiten Datenschreibeeinheit (260b) ungeltend gemacht wird;
- eine Schreibstatus-Überprüfungsphase, in der das Datenschreib-Schnittstellenmodul (320) überprüft, ob das Datenschreib-Statussignal (W-Stat) geltend gemacht wird, wobei das Datenschreib-Schnittstellenmodul (320) in diesem Fall eine Datenschreib-Wartephase ausführen wird, andernfalls wird es eine Datenschreibphase ausführen, wobei:
- in der Datenschreib-Wartephase das Datenschreib-Anforderungssignal (W-Req) ungeltend gemacht wird und von dem Datenschreib-Schnittstellenmodul (320) an die zweite Datenschreibeeinheit (260b) gesendet wird und ein Datenschreib-Wartesignal (W-Wait) geltend gemacht wird und von dem Datenschreib-Schnittstellenmodul (320) an die erste Datenschreibeeinheit (255) gesendet wird;
- in der Datenschreibphase das Datenschreib-Schnittstellenmodul (320) das Datenschreib-Anforderungssignal (W-Req) an die zweite Datenschreibeeinheit (260b) sendet, und wobei das Datenschreib-Schnittstellenmodul (320) die Daten (Q) von der ersten Datenschreibeeinheit (255) empfängt und die Daten (Q) an die zweite Datenschreibeeinheit (260b) sendet.

7. Verfahren nach Anspruch 6, wobei die erste Datenschreibeeinheit (255) einen ersten Datenschreib-Port (256) umfasst, der das Datenschreib-Anforderungssignal (W-Req) sendet und das Datenschreib-Wartesignal (W-Wait) empfängt und/oder die Daten (Q) sendet,
und wobei die zweite Datenschreibeeinheit (260b) einen zweiten Datenschreib-Port (262) umfasst, der das Datenschreibanforderungssignal (W-Req) empfängt und das Datenschreib-Statussignal (W-Stat) sendet und/oder die Daten (Q) empfängt,
und wobei das Datenschreib-Schnittstellenmodul (320) einen dritten Datenschreib-Port (321) umfasst, der das Datenschreib-Anforderungssignal (W-Req) empfängt und das Datenschreib-Wartesignal (W-Wait) sendet und/oder die Daten (Q) empfängt,
und wobei das Datenschreib-Schnittstellenmodul (320) einen vierten Datenschreib-Port (322) umfasst, der das Datenschreib-Anforderungssignal (W-Req) sendet und das Datenschreib-Statussignal (W-Stat) empfängt und/oder die Daten (Q) sendet.

8. Verfahren nach Anspruch 7, wobei der erste Datenschreib-Port (256) und der vierte Datenschreib-Port (322) vom Typ Master sind und wobei der zweite Datenschreib-Port (262) und der dritte Datenschreib-Port (321) vom Typ Slave sind.

9. Verfahren nach einem oder mehreren der Ansprüche 6 bis 8, wobei eine zweite Datenlese- und Schreibeeinheit (260) die zweite Datenschreibeeinheit (260b) umfasst, wobei die zweite Datenlese- und Schreibeeinheit (260) ein FIFO-Speichermodul umfasst, wobei das Datenschreib-Statussignal (W-Stat) ein FIFO-Vollspeichersignal umfasst.

10. Verfahren nach einem oder mehreren der Ansprüche 6 bis 9, wobei die erste Datenschreibeeinheit (255) ein DMA-Modul umfasst und das Datenschreib-Wartesignal (W-Wait) ein Warteanforderungssignal umfasst.

11. Computerprogrammprodukt umfassend Abschnitte des Softwarecodes, die in eine FPGA-Einheit (240) geladen werden, die eingerichtet ist, ein Datenlese-Schnittstellenmodul (310) nach dem Verfahren nach einem oder mehreren der Ansprüche 1 bis 5 zu implementieren.

12. System (100), umfassend erste Verarbeitungsmittel (110), Eingabe/Ausgabe-Schnittstellenmittel (120), Speichermittel (130) und zweite Verarbeitungsmittel (200) umfassend eine FPGA-Einheit (240), die eingerichtet ist, ein Datenlese-Schnittstellenmodul (310) nach dem Verfahren nach einem oder mehreren der Ansprüche 1 bis 5 zu implementieren.

13. Computerprogrammprodukt umfassend Abschnitte des Softwarecodes, die in eine FPGA-Einheit (240) geladen werden, die eingerichtet ist, ein Datenschreib-Schnittstellenmodul (320) nach dem Verfahren nach einem oder mehreren der Ansprüche 6 bis 10 zu implementieren.

14. System (100) umfassend erste Verarbeitungsmittel (110), Eingabe/Ausgabe-Schnittstellenmittel(120), Speichermittel (130) und zweite Verarbeitungsmittel (200), die eine FPGA-Einheit (240) umfassen, die eingerichtet ist, ein Datenschreib-Schnittstellenmodul (320) nach dem Verfahren nach einem oder mehreren der Ansprüche 6 bis 10 zu implementieren.

## Revendications

1. Procédé d'interfaçage d'une première unité de lecture de données (245) avec une seconde unité de lecture de données (260a) connectée de manière fonctionnelle à un module d'interface de lecture de données (310), ledit procédé comprenant :
• une phase de demande de lecture de données, dans laquelle un signal de demande de lecture de données (R-Req) est reçu par ledit module d'interface de lecture de données (310), ledit signal de demande de lecture de données (R-Req) étant activé et envoyé par ladite première unité de lecture de données (245) ;
• une phase de signalisation de l'état de lecture, dans laquelle un signal d'état de lecture de données (R-Stat) est reçu par ledit module d'interface de lecture de données (310), ledit signal d'état de lecture de données (R-Stat) étant envoyé par ladite seconde unité de lecture de données (260a), ledit signal d'état de lecture de données (R-Stat) étant activé en l'absence de données (Q) dans ladite seconde unité de lecture de données (260a) ;
• une phase de vérification de l'état de lecture, dans laquelle ledit module d'interface de lecture de données (310) vérifie si ledit signal d'état de lecture de données (R-Stat) est activé, auquel cas ledit module d'interface de lecture de données (310) exécutera une phase d'attente de lecture de données, sinon il exécutera une phase de lecture de données, dans laquelle :
• dans ladite phase d'attente de lecture de données, le signal de demande de lecture de données (R-Req) est désactivé et envoyé à ladite seconde unité de lecture de données (260a) par ledit module d'interface de lecture de données (310), et un signal d'attente de lecture de données (R-Wait) est activé et envoyé à ladite première unité de lecture de données (245) par ledit module d'interface de lecture de données (310) ;
• dans ladite phase de lecture de données, ledit module d'interface de lecture de données (310) envoie ledit signal de demande de lecture de données (R-Req) à ladite seconde unité de lecture de données (260a), et dans laquelle ledit module d'interface de lecture de données (310) reçoit les données (Q) de ladite seconde unité de lecture de données (260a) et envoie lesdites données (Q) à ladite première unité de lecture de données (245).

2. **.** Procédé selon la revendication 1, dans lequel ladite première unité de lecture de données (245) comprend un premier port de lecture de données (246) qui envoie ledit signal de demande de lecture de données (R-Req) et reçoit ledit signal d'attente de lecture de données (R-Wait) et/ou reçoit lesdites données (Q), et dans lequel ladite seconde unité de lecture de données (260a) comprend un second port de lecture de données (261) qui reçoit ledit signal de demande de lecture de données (R-Req) et envoie ledit signal d'état de lecture de données (R-Stat) et/ou envoie lesdites données (Q),
et dans lequel ledit module d'interface de lecture de données (310) comprend un troisième port de lecture de données (311) qui reçoit ledit signal de demande de lecture de données (R-Req) et envoie ledit signal d'attente de lecture de données (R-Wait) et/ou envoie lesdites données (Q),
et dans lequel ledit module d'interface de lecture de données (310) comprend un quatrième port de lecture de données (312) qui envoie ledit signal de demande de lecture de données (R-Req) et reçoit ledit signal d'état de lecture de données (R-Stat) et/ou reçoit lesdites données (Q).

3. Procédé selon la revendication 2, dans lequel ledit premier port de lecture de données (246) et ledit quatrième port de lecture de données (312) sont de type maître, et dans lequel ledit second port de lecture de données (261) et ledit troisième port de lecture de données (311) sont de type esclave.

4. **.** Procédé selon l'une quelconque des revendications 1 à 3, dans lequel une seconde unité de lecture et d'écriture de données (260) comprend ladite seconde unité de lecture de données (260a), ladite seconde unité de lecture et d'écriture de données (260) comprenant un module mémoire FIFO, et dans lequel ledit signal d'état de lecture de données (R-Stat) comprend un signal de mémoire FIFO vide.

5. Procédé selon l'une quelconque des revendications 1 à 4, dans lequel ladite première unité de lecture de données (245) comprend un module DMA, et dans lequel ledit signal d'attente de lecture de données (R-Wait) comprend un signal de demande d'attente.

6. **.** Procédé d'interfaçage d'une première unité d'écriture de données (255) avec une seconde unité d'écriture de données (260b) connectée de manière fonctionnelle à un module d'interface d'écriture de données (320), ledit procédé comprenant :
• une phase de demande d'écriture de données, dans laquelle un signal de demande d'écriture de données (W-Req) est reçu par ledit module d'interface d'écriture de données (320), ledit signal de demande d'écriture de données (W-Req) étant activé et envoyé par ladite première unité d'écriture de données (255) ;
• une phase de signalisation de l'état d'écriture, dans laquelle un signal d'état d'écriture de données (W-Stat) est reçu par ledit module d'interface d'écriture de données (320), ledit signal d'état d'écriture de données (W-Stat) étant envoyé par ladite seconde unité d'écriture de données (260b), ledit signal d'état d'écriture de données (W-Stat) étant désactivé en l'absence de données (Q) dans ladite seconde unité d'écriture de données ;
• une phase de vérification de l'état d'écriture, dans laquelle ledit module d'interface d'écriture de données (320) vérifie si ledit signal d'état d'écriture de données (W-Stat) est activé, auquel cas ledit module d'interface d'écriture de données (320) exécutera une phase d'attente d'écriture de données, sinon il exécutera une phase d'écriture de données, dans laquelle
• dans ladite phase d'attente d'écriture de données, le signal de demande d'écriture de données (W-Req) est désactivé et envoyé à ladite seconde unité d'écriture de données (260b) par ledit module d'interface d'écriture de données (320), et un signal d'attente d'écriture de données (W-Wait) est activé et envoyé à ladite première unité d'écriture de données (255) par ledit module d'interface d'écriture de données (320) ;
• dans ladite phase d'écriture de données, ledit module d'interface d'écriture de données (320) envoie ledit signal de demande d'écriture de données (W-Req) à ladite seconde unité d'écriture de données (260b), et dans laquelle ledit module d'interface d'écriture de données (320) reçoit les données (Q) de ladite première unité d'écriture de données (255) et envoie lesdites données (Q) à ladite seconde unité d'écriture de données (260b).

7. **.** Procédé selon la revendication 6, dans lequel ladite première unité d'écriture de données (255) comprend un premier port d'écriture de données (256) qui envoie ledit signal de demande d'écriture de données (W-Req) et reçoit ledit signal d'attente d'écriture de données (W-Wait) et/ou envoie lesdites données (Q), et dans lequel ladite seconde unité d'écriture de données (260b) comprend un second port d'écriture de données (262) qui reçoit ledit signal de demande d'écriture de données (W-Req) et envoie ledit signal d'état d'écriture de données (W-Stat) et/ou reçoit lesdites données (Q),
et dans lequel ledit module d'interface d'écriture de données (320) comprend un troisième port d'écriture de données (321) qui reçoit ledit signal de demande d'écriture de données (W-Req) et envoie ledit signal d'attente d'écriture de données (W-Wait) et/ou reçoit lesdites données (Q),
et dans lequel ledit module d'interface d'écriture de données (320) comprend un quatrième port d'écriture de données (322) qui envoie ledit signal de demande d'écriture de données (W-Req) et reçoit ledit signal d'état d'écriture de données (W-Stat) et/ou envoie lesdites données (Q).

8. Procédé selon la revendication 7, dans lequel ledit premier port d'écriture de données (256) et ledit quatrième port d'écriture de données (322) sont de type maître, et dans lequel ledit second port d'écriture de données (262) et ledit troisième port d'écriture de données (321) sont de type esclave.

9. **.** Procédé selon l'une quelconque des revendications 6 à 8, dans lequel une seconde unité de lecture et d'écriture de données (260) comprend ladite seconde unité d'écriture de données (260b), ladite seconde unité de lecture et d'écriture de données (260) comprenant un module mémoire FIFO, et dans lequel ledit signal d'état d'écriture de données (W-Stat) comprend un signal de mémoire FIFO pleine.

10. **.** Procédé selon l'une quelconque des revendications 6 à 9, dans lequel ladite première unité d'écriture de données (255) comprend un module DMA, et dans lequel ledit signal d'attente d'écriture de données (W-Wait) comprend un signal de demande d'attente.

11. **.** Produit programme informatique comprenant des portions de code logiciel, qui sont chargées dans une unité FPGA (240), adaptée à implémenter un module d'interface de lecture de données (310) conformément au procédé selon l'une quelconque des revendications 1 à 5.

12. **.** Système (100) comprenant des premiers moyens de traitement (110), des moyens d'interface d'entrée/sortie (120), des moyens de mémoire (130) et des seconds moyens de traitement (200) comprenant une unité FPGA (240) adaptée à implémenter un module d'interface de lecture de données (310) conformément au procédé selon l'une quelconque des revendications 1 à 5.

13. **.** Produit programme informatique comprenant des portions de code logiciel, qui sont chargées dans une unité FPGA (240), adaptée à implémenter un module d'interface d'écriture de données (320) conformément au procédé selon l'une quelconque des revendications 6 à 10.

14. **.** Système (100) comprenant des premiers moyens de traitement (110), des moyens d'interface d'entrée/sortie (120), des moyens de mémoire (130) et des seconds moyens de traitement (200) comprenant une unité FPGA (240) adaptée à implémenter un module d'interface d'écriture de données (320) conformément au procédé selon l'une quelconque des revendications 6 à 10.
